# EUROPÄISCHE PATENTSCHRIFT

(11) **EP 2 565 549 B1**
(45) Veröffentlichungstag und Bekanntmachung des Hinweises auf die Patenterteilung: **06.11.2019**
(21) Anmeldenummer: 12183098.8
(22) Anmeldetag: 05.09.2012
(51) Int. Cl.: F24F 13/08, F24F 13/14, F24F 13/02, F16K 1/22

(54) **Vorrichtung zum Regeln eines Luftvolumenstroms**
Device for regulating an air volume flow
Dispositif de réglage d'un débit volumétrique d'air

(30) Priorität: 05.09.2011 DE 102011053269
(43) Veröffentlichungstag der Anmeldung: 06.03.2013
(73) Patentinhaber: Schako Klima Luft Ferdinand Schad KG, 78600 Kolbingen (DE)
(72) Erfinder: Müller, Marcus, Dr., 78600 Kolbingen (DE); Müller, Rainer, Dr., 78600 Kolbingen (DE)
(74) Vertreter: Patentanwälte und Rechtsanwalt Weiß, Arat & Partner mbB

(56) Entgegenhaltungen:
- DE-C- 670 327
- GB-A- 2 438 420
- US-A1- 2005 109 415

## Beschreibung

Die Erfindung betrifft eine Vorrichtung nach dem Oberbegriff von Anspruch 1.

### Stand der Technik

In diesem Zusammenhang wird auf die US 4,100,938 verwiesen, welche einen Volumenstromregler offenbart. Daneben wird auf die EP 1 959 209 A1 hingewiesen, die eine erste Ausführungsvariante laut dem Oberbegriff des Anspruchs 1 zeigt. Dort ist eine zweiteilige Steuereinheit zur Dosierung eines Luftstroms offenbart. Weiterhin wird auf die EP 2 153 439 A1 hingewiesen, welche ebenfalls einen Volumenstromregler einer Drosselklappe aufzeigt.

Ausserdem wird auf die DE 670 327 C verwiesen, welche eine zweite Ausführungsvariante laut dem Oberbegriff des Anspruchs 1 zeigt, mit einer Drosselklappe mit rohrförmigem Gehäuse, wobei die Abschlussscheibe schräg zur Rohrachse steht. Weiter wird auf die GB 2 438 420 A hingewiesen, welches ein Schmetterlingsflügel - Ventil offenbart.

Volumenstromregler für die Regelung eines Luftvolumenstroms in einer klimatechnischen Anlage sind in vielfältiger Form bekannt und auf dem Markt. Beispielsweise zeigt die DE 91 13 510 U1 einen Volumenstromregler für eine sich entsprechend einer Luftgeschwindigkeit in einem Rohrabschnitt eines Lüftungs- bzw. Klimasystems selbst regulierenden Einstellklappe, welcher ein Drehelement aufgesetzt ist, wobei mit dem Drehelement ein Dämpfer verbunden ist, der als Dämpfungselement einen Gleitkolben beinhaltet.

Diese Volumenstromregler arbeiten in der Regel selbsttätig ohne Hilfsenergie, wobei die Einstellklappe durch die Luftgeschwindigkeit in dem Rohrabschnitt bewegt wird. Die Klappe ist in der Regel zentrisch angeordnet und gelagert, so dass sie sich drehen kann. Eine Rückstellung der Einstellklappe in eine gewünschte Ausgangslage kann beispielsweise durch eine Feder oder einen elektromotorisch angetriebenen Regler erfolgen.

Eine ähnliche Anordnung ist auch in der DE 39 17 360 A1 beschrieben. Dort ist einer separate Einstellvorrichtung für die Einstellklappe ein Regler zugeordnet, welcher von einer Regeleinheit, insbesondere von einem Raumthermostat, steuerbar ist. Hierdurch findet eine Voreinstellung der Einstellklappe statt, wobei dann die weitere Regelung durch die Luftgeschwindigkeit erfolgt.

### Aufgabe

Aufgabe der vorliegenden Erfindung ist es, eine Vorrichtung der o.g. Art zu schaffen, die auf einfache Art und Weise und kostengünstig herstellbar und zusammenbaubar ist.

### Lösung der Aufgabe

Zur Lösung der Aufgabe führen die Merkmale des Patentanspruchs 1.

Ziel der vorliegenden Erfindung ist vor allem, den Zusammenbau des gesamten Bauelementes zu erleichtern, und dies ohne zusätzliche Werkzeug bzw. notwendigen Bohrungen. Das bedeutet auch, dass die Teile des Bauelements bevorzugt im Spritzgiessverfahren hergestellt werden können, was die Kosten reduziert. Grundgedanke der Erfindung ist es, dass das Bauelement aus zwei Teilen hergestellt wird, die beim Zusammensetzen zwischen sich die Klappenachse der Mengeneinstellklappe aufnehmen.

Erfindungsgemäss kann dies einmal dadurch geschehen, dass das Bauelement senkrecht zur Luftstromführung in zwei Teile aufgeteilt wird. Dadurch entstehen, sofern das Bauelement als kreisförmiges Rohr ausgestaltet ist, zwei Rohrteile, die dann später zur Aufnahme der Klappenachse ineinander gesteckt werden.

Bei einem weiteren Ausführungsführungsbeispiel der Erfindung kann aber das Bauelement auch in Strömungsrichtung in zwei oder mehrere Teile zerlegt werden, die dann als Schalen ausgebildet sind. Auch diese Schalen werden unter Aufnahme der Klappenachse zusammengesteckt.

Damit die Teile besser zusammengesetzt werden können, sind erfindungsgemäss an bzw. in entsprechende aufeinanderzusetzende Stirnkanten Einformungen bzw. Vorsprünge vorgesehen, die nut- und federartig ineinandergreifen.

Erfindungsgemäss weisen die Rohrteile bzw. Schalen eine Rastverbindung auf. Es können aber beliebige Rastverbindungen vorgesehen sein, welche die beiden bzw. mehreren Teile zusammenhalten. Im einfachsten Ausführungsbeispiel ist an einem Teil eine Rastzunge und am anderen Teil eine Rastung oder Rastfläche oder Rastausnehmung vorgesehen, in welche die Rastzunge eingesetzt bzw. eingeklipst werden kann.

Zur besseren Lagerung der Klappenachse sind in den entsprechenden aufeinanderzusetzenden Stirnkanten der einzelnen Teile Lagerstellen vorgesehen. Diese können in einem einfachen Ausführungsbeispiel kreuzförmige Ausnehmungen sein, wobei in die einen Ausnehmungen bzw. Vertiefungen die Klappenachse bzw. Lagerstummel der Klappenachse eingelegt werden und in die senkrecht dazu verlaufenden Vertiefungen Drehscheiben, welche den Achsstummeln angeformt sind. Hier sind viele Möglichkeiten denkbar, die von der vorliegenden Erfindung umfasst sein sollen.

### FIGURENBESCHREIBUNG

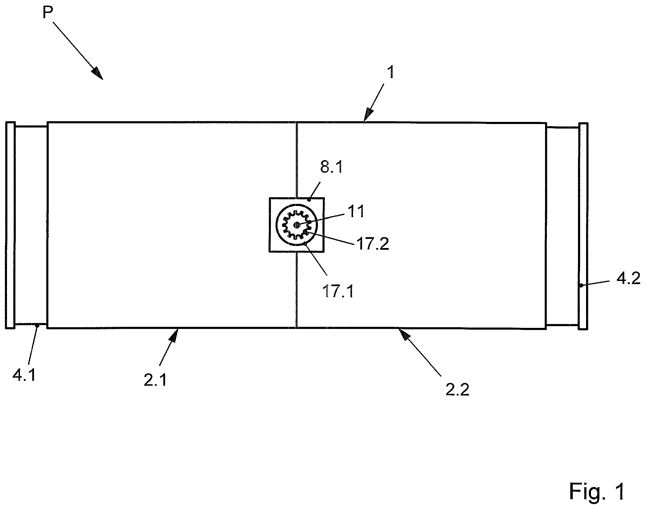

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf eine erfindungsgemässe Vorrichtung zum Regeln eines Luftvolumenstroms;
Figur 2 eine Frontansicht eines erfindungsgemässen Rohrteils als Teil der Vorrichtung gemäss Figur 1;
Figur 3 eine Seitenansicht des Rohrteils gemäss Figur 2;
Figur 4 eine Draufsicht auf das Rohrteil gemäss Figur 2 mit eingesetzter Klappe;
Figur 5 eine vergrössert dargestellte schematische Darstellung einer Rastverbindung zwischen zwei Rohrteilen;
Figur 6 einen Schnitt durch die beiden Rohrteile gemäss Figur 5 entlang Linie VI-VI.

Eine erfindungsgemässe Vorrichtung P zum Regeln eines Luftvolumenstroms weist ein Bauelement 1 laut Anspruch 1 auf, welches aus zwei Rohrteilen 2.1 und 2.2 besteht. Bevorzugt sind diese Rohrteile 2.1 und 2.2 aus Kunststoff hergestellt.

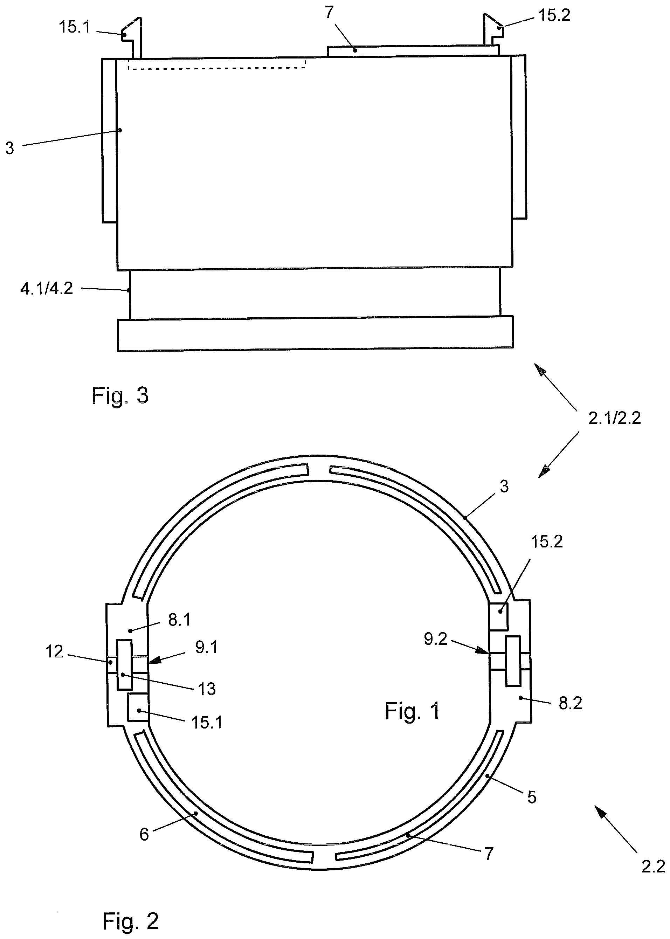

Gemäss den Figuren 2 und 3 weist jedes Rohrteil 2.1 bzw. 2.2 einen Mantel 3 auf, an dem ein Anschlussflansch 4.1 bzw. 4.2 zum Verbinden des Bauelements 1 mit anderen Teilen eines Luftleitungssystems angeformt ist. Gegenüber diesem Anschlussflansch 4 bildet jedes Rohrteil 2.1 / 2.2 eine Stirnkante 5 aus. In diese Stirnkante 5 sind Einformungen 6 bzw. Vorsprünge 7 für eine später beschriebene Nut- und Federverbindung ein- bzw. angeformt.

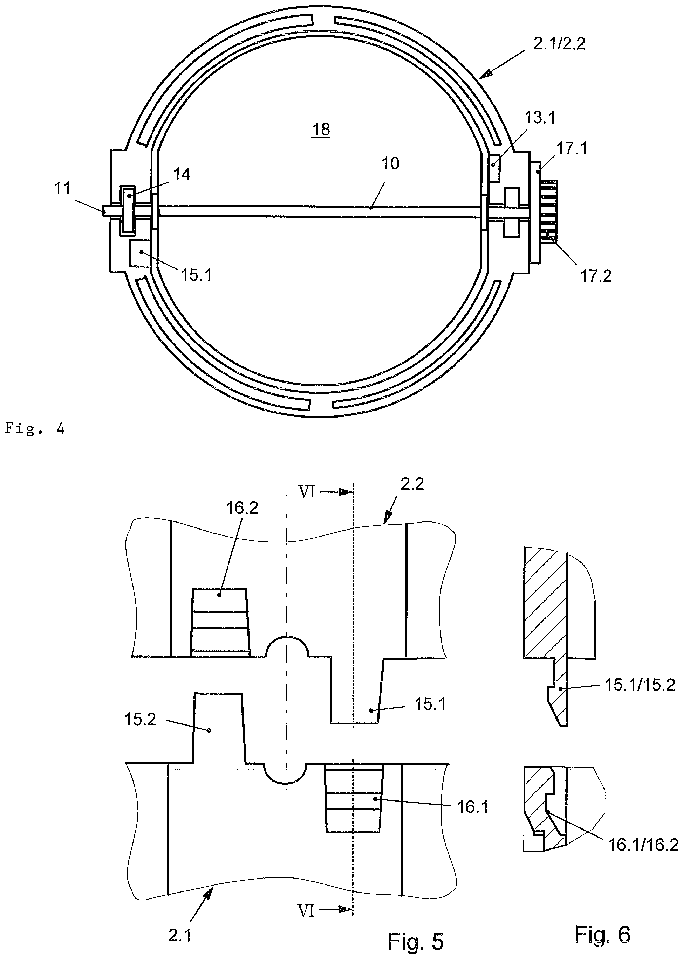

Sich gegenüberliegend sind im Bereich des Mantels 3 Funktionsstellen 8.1 und 8.2 vorgesehen, die verdickt ausgebildet sind. Diese Funktionsstellen 8.1 bzw. 8.2 weisen zum einen Lagerstellen 9.1 und 9.2 für eine in Figur 4 gezeigte Klappenachse 10 auf, die aus kreuzförmigen Vertiefungen bestehen. Die Klappenachse 10 bzw. entsprechende Achsstummel 11 liegen in achsparallel verlaufenden Vertiefungen 12, während in senkrecht dazu angeordneten Vertiefungen 13 in Gebrauchslage bzw., wie in Figur 4 gezeigt, Drehscheiben 14 eingesetzt sind.

Der Klappenachse 10 sind ferner gemäss Figur 4 noch Bauteile 15.1 und 15.2 einer Dämpfungseinrichtung zugeordnet, wie sie beispielsweise in der DE 20 2006 011300 gezeigt sind.,

Des weiteren ragen, wie insbesondere in Figur 3 gezeigt, von den Funktionsstellen 8.1 und 8.2 Rastzungen 15.1 und 15.2 auf, die mit entsprechenden Rastflächen 16.1 bzw. 16.2 an jeweils dem anderen Rohrteil zusammenwirken.

Die Funktionsweise der vorliegenden Erfindung ist folgende:
Vor dem Einbau des Bauelementes 1 in ein Luftleitungssystem einer klimatechnischen Anlage wird eine Klappe 17 mit ihrer Klappenachse 10 so auf einem Rohrteil 2.1 bzw. 2.2 angeordnet, dass die entsprechenden Drehscheiben 14 in den achsparallel verlaufenden Vertiefungen 12 der Funktionsstellen 8.1 bzw. 8.2 frei lagern. Ebenfalls liegen die Achsstummel 11 in den Vertiefungen 13. Nunmehr wird ein weiteres Rohrteil 2.1 bzw. 2.2 mit seiner Stirnfläche auf das erste Rohrteil 2.1 bzw. 2.2 aufgesetzt, so dass die Rastzunge 15.1 in bzw. auf den Rastflächen 16.1 bzw. 16.2 aufgleiten. Ggf. können sich die entsprechenden Rastflächen 16.1 und 16.2 auch als Sacklöcher in den Funktionsstellen 8.1 bzw. 8.2 befinden. Hierdurch befindet sich dann die Klappe 18 mit ihrer Klappenachse 10 zwischen den beiden Rohrteilen 2.1 und 2.2 und ist dort sicher gelagert. Danach können entsprechende Achsstummeln 11 der Klappenachse 10 Funktionselemente bzw. Bauelemente einer Klappendämpfung zugeordnet werden.

**Bezugszeichenliste**

| | | | | | |
|---|---|---|---|---|---|
| 1 | Bauelement | 34 | | 67 | |
| 2 | Rohrteil | 35 | | 68 | |
| 3 | Mantel | 36 | | 69 | |
| 4 | Anschlussflansch | 37 | | 70 | |
| 5 | Stirnkante | 38 | | 71 | |
| 6 | Einformung | 39 | | 72 | |
| 7 | Vorsprung | 40 | | 73 | |
| 8 | Funktionsstelle | 41 | | 74 | |
| 9 | Lagerstelle | 42 | | 75 | |
| 10 | Klappenachse | 43 | | 76 | |
| 11 | Achsstummel | 44 | | 77 | |
| 12 | Vertiefung | 45 | | 78 | |
| 13 | Vertiefung | 46 | | 79 | |
| 14 | Drehscheibe | 47 | | | |
| 15 | Rastzunge | 48 | | | |
| 16 | Rastfläche | 49 | | | |
| 17 | Bauelement | 50 | | | |
| 18 | Klappe | 51 | | | |
| 19 | | 52 | | | |
| 20 | | 53 | | | |
| 21 | | 54 | | | |
| 22 | | 55 | | P | Vorrichtung |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Regeln eines Luftvolumenstromes insbesondere in einem Leitungssystem einer klimatechnischen Anlage mittels einer Klappe (18), die in einem Bauelement (1) des Leitungssystems um eine Klappenachse (10) drehbar angeordnet ist, wobei das Bauelement (1) aus zumindest zwei Teilen (2.1, 2.2) besteht, zwischen denen zumindest ein Teil (11, 14) der Klappenachse (10) aufgenommen ist,
**dadurch gekennzeichnet,**
**dass** das Bauelement (1) senkrecht zum Leitungssystem in zumindest zwei Rohrteile (2.1, 2.2) aufgeteilt ist, oder das Bauelement (1) in Richtung einer Längsachse des Leitungssystems in zumindest zwei Teile aufgeteilt ist, wobei die Teile als Schalen ausgebildet sind, wobei die Rohrteile (2.1, 2.2) oder Schalen in oder auf ihren zueinander weisenden Stirnkanten (5) nut- und federförmig miteinander zusammenwirkende Einformungen (6) oder Vorsprünge (7) aufweisen, wobei die Rohrteile (2.1, 2.2) bzw. Schalen zumindest eine Rastverbindung (15, 16) miteinander eingehen.

2. Vorrichtung nach Anspruch 1, **dadurch gekennzeichnet, dass** die Rohrteile (2.1, 2.2) bzw. Schalen in ihren zueinander weisenden Stirnkanten (5) zumindest eine Lagerstelle (9.1, 9.2) für die Klappenachse (10) aufweisen.

3. Vorrichtung nach wenigstens einem der Ansprüche 1 bis 2, **dadurch gekennzeichnet, dass** zumindest die zwei Teile (2.1, 2.2) aus Kunststoff hergestellt sind.

## Claims

1. Device for regulating an air volume flow, in particular in a conduit system of an air-conditioning installation, by means of a flap (18) which is arranged in a component (1) of the conduit system so as to be rotatable about a flap axis (10), the component (1) comprising at least two parts (2.1, 2.2) between which at least one part (11, 14) of the flap axis (10) is accommodated,
**characterized, in that**
the component (1) is divided perpendicularly to the conduit system into at least two pipe parts (2.1, 2.2), or the component (1) is divided into at least two parts in the direction of a longitudinal axis of the conduit system, the parts being designed as shells, the pipe parts (2.1, 2.2) or shells having groove-shaped and spring-like indentions (6) or projections (7) in or on their mutually facing end edges (5) which interact with one another, the pipe parts (2.1, 2.2) or shells forming at least one latching connection (15, 16) with one another.

2. Device according to claim 1, **characterized in that** the pipe parts (2.1, 2.2) or shells have at least one bearing point (9.1, 9.2) for the flap axis (10) in their mutually facing end edges (5).

3. Device according to at least one of claims 1 to 2, **characterized in that** at least the two parts (2.1, 2.2) are made of plastic.

## Revendications

1. Dispositif de réglage d'un débit volumétrique d'air, en particulier dans un système de tuyauterie d'une installation de climatisation, au moyen d'un volet (18) qui est disposé de manière rotative dans un composant (1) du système de tuyauterie autour d'un axe de volet (10), dans lequel le composant (1) se compose d'au moins deux parties (2.1, 2.2) entre lesquelles est reçue au moins une partie (11, 14) de l'axe de volet (10),
**caractérisé par le fait**
**que** le composant (1) est divisé, perpendiculairement au système de tuyauterie, en au moins deux parties de tuyau (2.1, 2.2), ou que le composant (1) est divisé, dans la direction d'un axe longitudinal du système de tuyauterie, en au moins deux parties, où les parties sont réalisées en forme de coques, où les parties de tuyau (2.1, 2.2) ou coques présentent, dans ou sur leurs bords frontaux (5) orientés l'un vers l'autre, des creux (6) ou saillies (7) coopérant entre eux en forme de rainure et languette, où les parties de tuyau (2.1, 2.2) ou coques établissent au moins un assemblage par encliquetage (15, 16) entre elles.

2. Dispositif selon la revendication 1, **caractérisé par le fait que** les parties de tuyau (2.1, 2.2) ou coques présentent, dans leurs bords frontaux (5) orientés l'un vers l'autre, au moins un point d'appui (9.1, 9.2) pour l'axe de volet (10).

3. Dispositif selon au moins l'une des revendications 1 à 2, **caractérisé par le fait qu'**au moins les deux parties (2.1, 2.2) sont réalisées en matière plastique.
